**Europäisches Patentamt**

**European Patent Office**

**Office européen des brevets**

(11) Veröffentlichungsnummer: **0 188 176**
**A2**

# EUROPÄISCHE PATENTANMELDUNG

(21) Anmeldenummer: **85830090.8**

(22) Anmeldetag: **12.04.85**

(51) Int. Cl.⁴: **B 60 R 11/02**

(30) Priorität: 18.12.84 IT 514684 U
25.01.85 IT 473485 U

(43) Veröffentlichungstag der Anmeldung:
23.07.86 Patentblatt 86/30

(84) Benannte Vertragsstaaten:
BE CH DE FR LI NL SE

(71) Anmelder: CENTRO AUTORADIO HI-FI s.n.c. di PORI DANIELE & C.
Via Malaguti, 4
I-40126 Bologna(IT)

(72) Erfinder: Pori, Gabriele
Centro Autoradio HI-FI s.n.c. di PORI Daniele & C.
Via Malaguti, 4 I-40126 Bologna(IT)

(74) Vertreter: Rinaldi, Carlo
c.o. Studio Brevetti Nazionali ed Esteri dell'Ing. Carlo Rinaldi & C. s.d.f. Piazza di Porta Castiglione, 16
I-40136 Bologna(IT)

(54) **System zur Befestigung von Funkempfängern an Innenräume von Armaturenbretter oder ähnliche Hohlräume, um den Diebstahl von den erwähnten Funkempfängern zu verhindern.**

(57) Ein System zur Befestigung eines Funkempfängers innerhalb eines Kraftwagensraumes schließt ein: zwei Bänder (6 und 7) aus selbstschmierendem Stoff, der genau zwei Enden eines Körpers (1) eines Funkempfängers aufwickeln und ein Behälter (8) der genau die Bänder enthält um eine Verbindung zu erlangen, die dem Körper (1) die Vor- und Zurücktranslations-bewegungen erlaubt.

Ein elektrischer Motor (4), der am Körper (1) fest ist, bewegt einen Nocken (25), an dem ein Bolzen (29) fest ist, das auf einen Schlitz, im Behälter (8) gemacht, läuft.

Flügel sind durch Koppeln, um eine Vorderöffnung (20) des Behälters (8) auf-oder zuzugehen, verbunden.

FIG. 1

SYSTEM ZUR BEFESTIGUNG VON FUNKEMPFÄNGERN AN INNENRÄUME
VON ARMATURENBRETTERN ODER ÄHNLICHE HOHLRAUME, UM DEN
DIEBSTAHL VON DEN ERWÄHNTEN FUNKEMPFÄNGERN ZU VERHINDERN

Die Erfindung betrifft ein System zur Befestigung eines Funkempfängers innerhalb eines Hohlraums von einem Kraftwagen um dessen Diebstahl zu verhindern; besonders betrifft sie ein durch einen elektrischen Motor gesteuertes System, das unter der Wirkung von durch dazu bestimmte Druckknöpfe oder Mikroschalter empfangenen Steuerimpulsen wirkt, um einen Körper mit dem Funkempfänger innerhalb eines Behälters vor-oder rückwärts zu verschieben und gleichzeitig die auf eine Öffnung des Behälters gestellten Flügel auf-und zuzugehen; der Behälter ist innerhalb des Hohlraums befestigt und besteht aus besonders kräftigem Material.

Ein System von Diebstahlsicherung der auf Kraftwagen montierten Funkempfänger wird in der italienischen Patentanmeldung Nr. 3359 A/83 beschreibt, die am 09.03.83 von der anfragenden Firma hinterlegt wurde, in der ein Körper bestehend aus einem Metallgehäuse einen Funkempfänger enthält und ein Behälter enthält den erwähnten Körper. Ein an dem Behälter fester elektrischer Motor, bewegt einen Nocken, dem ein Bolzen fest gemacht ist, der auf ein Loch in einem Zusatz, der Teil dieses Körpers ist, läuft; ein einbruchssicherer Flügel ist mit dem Körper durch Koppeln verbunden um eine Vorderöffnung des Behälters auf-oder zuzugehen; Gleitnuten sind in den Seitenwänden des Behälters um die auf den Körper angelekten Laufrollen zu bekommen und zu lenken.

Das System der erwähnten Anmeldung zeigte einige Nachteile wie: die Stellung des Motors und die Anwesenheit von Gleitnuten. Die Stellung des Motors an der Wand des Behälters machte die Vorrichtung nicht ganz sicher im Falle eines Einbruchs. Die Anwesenheit von Seitengleitnuten verlangte teuere Bearbeitungen des nötigen Bleichs für den Behälter. Die Anwesenheit eines einzigen Flügels machte den Zusammenbau des Systems auf einige Arten von Kraftwagen problematisch.

Die Erfindung, wie bei den Ansprüchen gekennzeichnet ist, löst das Problem der Schaffung eines Befestigungssytem von Funkempfängern in der Innenseite von Armaturenbretten oder von ähnlichen Räumen von Kraftwagen, das, nach dem Wunsch des Kraftwagenbesitzers und mittels eines elektrischen Motors den erwähnten Funkempfänger verschiebt, der in einem von einer festgesetzten Zahl von Bändern aus selbstschmierendem Stoff aufgewickelten Körper enthalten ist, die dafür geeignet sind, zusammen mit dem Funkempfänger, innerhalb eines Schutzbehälters, in dem genannten Raum, laufen zu können, und das erlaubt das Schließen desselben Behälters durch einbruchsichere Schutzflügel; in diesem System ist der genannte elektrische Motor vom selben Schutzbehälter, der ihn schützt, unerreichbar gemacht und an dem Körper des Funkempfängers fest; außerdem besteht der genannte elektrische Motor aus einem strukturellen Teil, der genug kräftig ist, um seinerseits die Abfuhr des Funkempfängers vom Schutzbehälter zu verhindern.

Die Vorteile dieser Erfindung, außer denjenigen der italienischen Anmeldung Nr. 3359 A/83, bestehen darin, daß die Traslationsbewegungen von erwähnten Bändern, die sich mit dem Körper des Funkempfängers mit niedrigen Kosten und in kurzer Zeit zusammenbauen, erleichtert werden. Überdies macht die Verwendung von mehreren Flügeln die Installation des Systems auf Kraftwagenräume von jedem Maß möglich. Schließlich, unterscheidet sich das System durch seine beträchtliche Kräftigkeit.

Die Erfindung wird nachher mit der Hilfe von Zeichnungen, die zwei Ausführungen darstellen, ausführlich erläutert. Es zeigt:

Abb.1 ist eine Perspektive eines Funkempfängers auf dessen Körper 2 Bänder aus selbstschmierendem Stoff verbunden worden sind.

Abb. 2 ist eine Perspektive einer ersten Ausführungsform eines Behälters, der den erwähnten Körper mit Verbindungsmitteln zu einem Raum, in dem Armaturenbrett eines Kraftwagens gemacht, enthält.

Abb.3 ist eine Hinterperspektive eines Behälters nach dieser Erfindung.

Abb.4 ist eine Seitenperspektive einer ersten Ausführung eines Behälters, der mit einem Schlitz mit zur Bestimmung vom Positionieren des Behälters innerhalb des Raumes geeigneten Mitteln versehen ist.

Abb.5 stellt schematisch die Arbeitsweise des Systems nach dieser Erfindung, dar.

Abb.6 ist eine Perspektive einer zweiten Ausführung eines Behälters, der den erwähnten Körper mit Verbindungsmitteln zu einem Raum, in dem Armaturenbrett eines Kraftwagens gemacht, enthält.

Abb.7 ist eine Seitenperspektive einer zweiten Ausführung eines Behälters, der mit einem Schlitz mit zur Bestimmung vom Positionieren des Behälters innerhalb des Raumes geeigneten Mitteln versehen ist.

95.

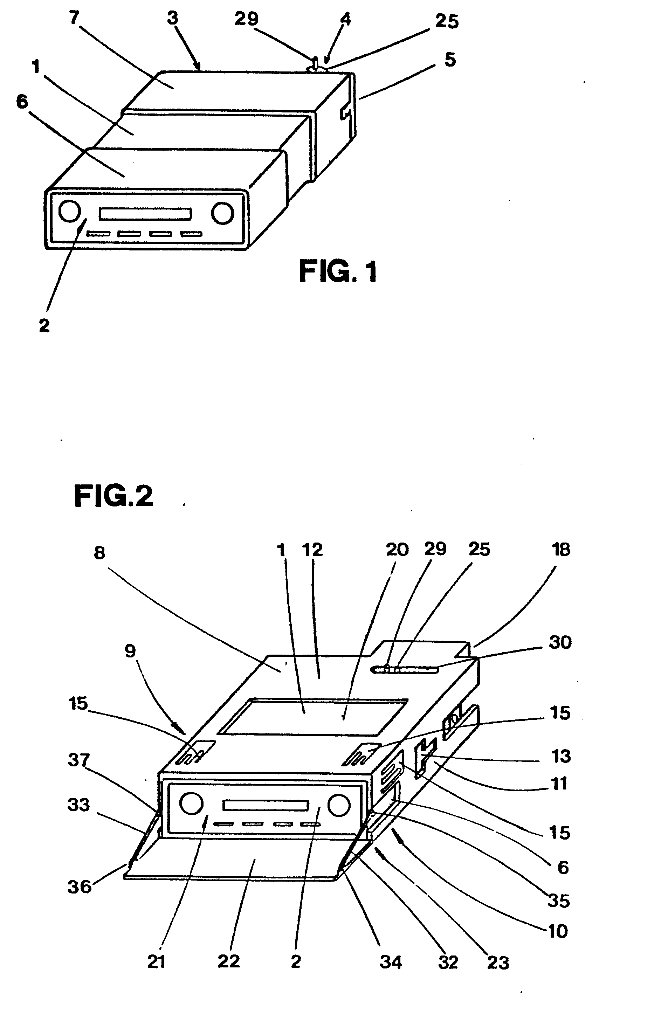

Nach der Abb.1 ist ein Funkempfänger innerhalb eines Gehäuse ähnlichen Körpers 1 mit einer Vorderwand 2, auf die sich Steuerungsknöpfe befinden, eine Hinterwand 3, die einen an ihr mittels einer Klaue 5 festen elektrischen Motor 4 unterstützt, enthalten ist. An den Seitenwänden des Körpers 1 sind ein erstes Band 6 und ein zweites Band 7 aus selbstschmierendem Stoff festgelegt und, beziehungsweise, in einem ersten Vorderteil und in einem zweiten Hinterteil des körpers 1 angeordnet. In Abb. 2 bemerken wir, daß ein Behälter 8, der dafür geeignet ist, innerhalb eines (nicht dargestellten) Raumes eines (nicht dargestellten) Kraftwagens eingesetzt zu werden, den erwähnten Körper 1 enthält, so daß die oben genannten Bänder 6 und 7 genau in den inneren (nicht dargestellten) Oberflächen von vier Wänden 9, 10, 11 und 12 enthalten werden können, die den genannten Behälter 8 seitlich begrenzen.

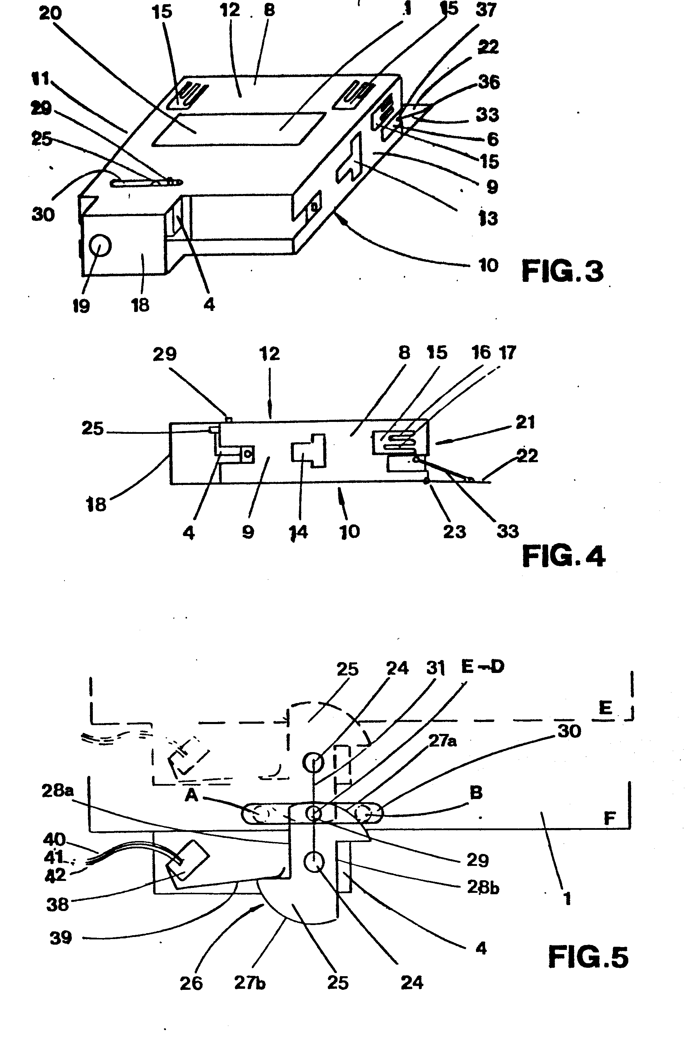

Die Seitenwände 9 und 11 haben, beziehungsweise, ein erstes Loch 13 und ein zweites Loch 14 (siehe Abb.4) um die Enden von den (vom neuen und nicht dargestellten Typ) Verbindungsmitteln des Behälters zu dem Raum aufzunehmen; außerdem stellen die selben Wände 9 und 11 einen Schlitz 15 vor, der in Abb. 4 besser dargestellt ist; gleiche Schlitze, aber in Zahl von zwei, sind in den Wänden 10 und 12.

Wie besser in Abb.4 dargestellt wird, stellt jeder Schlitz 15 zwei Lappen 16 und 17 vor, die durch Materialabfuhr von der bezüglichen Wand erlangt werden, und die die Aufgabe haben, eine Gesperreebene in Bezug auf Rände einer in der Wand des Raumes gemachten Öffnung zu bestimmen, um den Behälter 8 enthalten zu können.

Die Hinterwand des Behälters 8 (Abb.3) ist im allgemeinen eröffnet aber sie unterstützt eine U-Struktur 18, die durch (nicht dargestellte) Schweisspunkte-oder Naht am Behälter 8 fest ist. Die genannte Struktur 18 ist dafür geeignet, den elektrischen Motor 4 und die an ihm verbundenen mechanischen Elementen zu beschützen und in einer Bohrung 19 ein nicht dargestelltes Gesperreelement des Behälters, mit Gewinde, aufzunehmen.

Die Oberwand 12 stellt eine Öffnung 20 vor, um die Abkühlung des Körpers 1 zu erlauben, wenn der Funkempfänger arbeitet; eine ähnliche, nicht dargestellte, Öffnung befindet sich in der Unterwand 10.

Der Behälter 8 hat eine Vorderöffnung 21 um die Vorderwand 2 des körpers 1 hervorzuheben und die, dafür geeignet ist, durch einen auf ein Ende 23 der Wand 10 Scharnierangelenkten Flügel 22 geschlossen zu werden.

Auch in Bezug auf Abb.5, ist der Motor 4 innerhalb der U-Struktur angeordnet, und zeigt eine Welle 24, die an einem Nocken fest ist, deren Profil 26 aus zwei, unter sich ganz gleichen, runden Teilen 27a und 27b, und aus zwei, unter sich ganz gleichen, Einschnitten 28a und 28b, besteht.

Der Teil 27a trägt festenweise ein von einem Schlitz 30 genau enthaltenes Bolzen 29 um darin von einer ersten Stellung A zu einer zweiten Stellung B und umgekehrt laufen zu können, wenn die Welle dreht; bei diesem Laufen, befindet sich das Bolzen 29 in einer dritten Stellung E und in einer vierten Stellung D, die beziehungsweise als oberer Totpunkt und unterer Totpunkt eines Kurbelbetriebes bezeichnet sind, wo das Bolzen 29 als Kurbelzapfen einer Kurbel 31 arbeitet, die mit einem Segment, das die Welle 24 und das im Schlitz 30 laufende Bolzen 29 verbindet, dargestellt wird. Aus diesem Grund, wenn das Bolzen 29 in Stellung C liegt, befindet sich der Körper 1 in einer fünften in Bezug auf den Behälter 8 vorgeschobenen Stellung E und wenn das Bolzen 29 in Stellung C liegt, befindet sich der Körper 1 in einer sechsten in Bezug auf Körper 8 zurückgesetzten Stellung F. Diese Bewegung des Körpers 1 ist vom an ihm festen Motor 4 ermöglicht.

Um beziehungsweise das Öffnen and das Schließen des Flügels 22 zu haben, wenn der Körper 1 sich in der Stellung E und in der zweiten Stellung F befindet, sind 2 Übertragungs stangen 32 und 33 vorgesehen, die der Flügel 22 mit dem Band 6 verbinden. Die Übertragungsstange 32 ist zwischen zwei Bolzen 34 und 35 angelenkt, die beziehungsweise, von dem Flügel 22 und von dem ersten Band 6 getragen werden; die Übertagungsstange 33 ist zwischen zwei Bolzen 36 und 37 angelenkt, die beziehungsweise, von dem Flügel 22 und von dem Band 6 getragen werden.

Um die Translationsbewegungen des Körpers 1 von der Stellung E zur Stellung F und umgekehrt zu unterbrechen, ist ein Mikroschalter 38 (Abb.5) vorgesehen, der mit einem Hebel 39 und drei Leitungen 40, 41 und 42 versehen ist; die Leitungen verbunden den Mikroschalter 38 mit dem Motor 4 zu den nicht dargestellten Steuerungsknöpfen, die zur Verfügung des Fahrers gestellt und eventuell, wenn der Schlüssel des Kraftwagens ausgeschaltet ist, blockiert werden.

Der Mikroschalter 38 ist am Körper 1 fest um seine Entfernung vom Motor 4 während des Gebrauches des Systems unverändlich zu halten, deshalb hält sich sein Hebel ständig in Berührung mit dem Profil 26 des Nockens 25. Wenn einer der zwei Einschnitten 28a und 28b den Hebel 39 des Mikroschalters 38 einwirkt, unterbricht sich der Stromkreis, der den Motor speist, und deshalb unterbricht sich die Bewegung der Welle 24.

Um diese Unterbrechungen, wenn der Körper sich in der Stellung F oder E befindet, zu haben, braucht man, daß die Einschnitte 28a und 28b wie in Abb. 5 angeordnet werden, und d.h., daß sie den Hebel 39 einwirken, wenn der Körper 1 sich in der Stellung E oder F befindet.

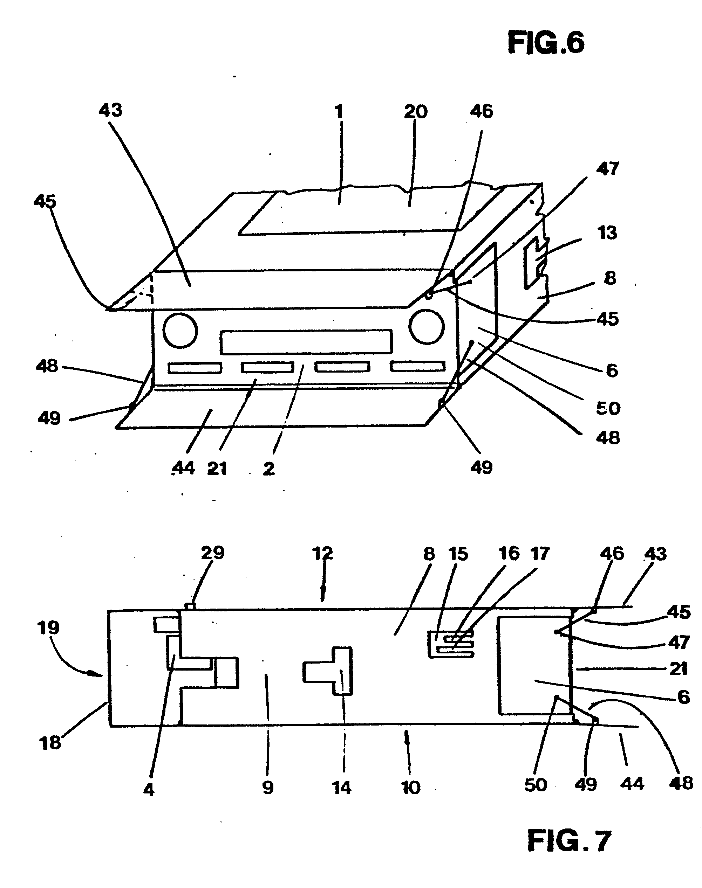

Die Verwirklichungsform der Erfindung, in Abb.6 und 7 dargestellt, unterscheidet sich von der Form der Abb.1 zu 4 nur davon, daß die Voröreffnung 21 des Behälters durch zwei beziehungsweise Ober-und Unterflügel 43 und 44 geschlossen ist.

Zwischen dem obenen Flügel 43 und dem Band 6 befindet sich eine auf zwei Bolzen 46 und 47 angelenkte Übertragungsstange 45, die beziehungsweise an dem Flügel 43 und an dem Band 6 fest sind.

Zwischen dem Unterflügel 44 und dem Band 6 befindet sich eine auf zwei Bolzen 49 und 50 angelenkte Übertragungnsstange 48, die beziehungsweise and dem Flügel 44 und an dem Band 6 fest sind.

Natürlich, auch in diesem Fall, wenn der Körper 1 in der Stellung E liegt, befinden sich die Flügel 43 und 44 in der Öffnungsstellung F und wenn der Körper 1 in der Stellung F liegt, befinden sich die Flügel 43 und 44 in der Schließenstellung.

An den beschriebenen und dargestellten Ausführungsformen können Veränderungen gemacht werden, besonders den Bändern die den ganzen Körper 1 aufwickeln.
Diese Bänder können eine Struktur aus selbstschmierendem Stoff bilden, die den ganzen Körper 1 aufwickelt. Außerdem, ist es möglich ein Laufen des Körpers 1 zu erlangen auch wenn die Bänder in Bezug auf den Behälter fest sind, deshalb wird eine weitere Form vorausgesehen, wo der Behälter 8 zwei Bänder unterstützt, die vorzugsweise an zwei gegen-übergestellten Wänden sind.

ANSPRÜCHE

1- System zur Befestigung von Funkempfängern an Innenräume von Armaturenbretten oder ähnliche Räume von Kraftwagen um den Diebstahl der erwähnten Funkempfänger zu verhindern; es besteht wenigstens aus: einem Behälter, der innerhalb eines Raumes festgelegt ist, um einen Körper mit Funkempfängern zu enthalten; aus Befestigungsmitteln des erwähnten Behälters in Bezug auf den Raum; aus Flügeln um eine Voröffnung des erwähnten Behälters zuzugehen; aus einem elektrischen Motor, der eine Welle drehen läßt, an der ein Nocken fest gemacht ist; aus angelenkten Verbindungsmitteln zwischen dem erwähnten Körper und den erwähnten Flügeln um die erwähnten Flügel zuzugehen, wenn der erwähnte Körper sich in einer ersten Stellung befindet und um die Flügel aufzugehen, wenn der erwähnte Körper sich in einer zweiten Stellung befindet, dadurch gekennzeichnet, daß der elektrische Motor an dem genannten Körper festgelegt ist und der genannte Nocken ein Bolzen trägt, das in einem Schlitz läuft, um Translationsbewegungen des erwähnten Körpers von der ersten zu der zweiten Stellung und umgekehrt zu erlangen; daß eine Struktur aus selbstschmierendem Stoff den erwähnten Körper aufwickelt und innerhalb des erwähnten Behälters enthalten ist, um den erwähnten Translationsbewegungen zu leiten; daß der erwähnte Behälter eine Pluralität von biegsamen Lappen zeigt, die dafür geeignet sind, eine Bezugsebene des erwähnten Behälters in Bezug auf den Raum, zu bestimmen; daß ein Mikroschalter von dem erwähnten Nocken betätigt ist, um ein Versorgungsstromkreis des erwähnten Motors aus-oder abzuschalten.

10

2- System zur Befestigung nach Anspruch 1, dadurch gekennzeichnet, daß die erwähnte Struktur aus wenigstens einem Band besteht, das auf den erwähnten Körper festgelegt ist, um ihn auf alle Seitenwänden aufzuwickeln.

3- System zur Befestigung nach Anspruch 1 dadurch gekennzeichnet, daß die erwähnte Struktur aus wenigestens zwei Bändern besteht, die von wenigstens zwei gegenüberliegenden Wänden der erwähnten Körper festgelegt sind.

4- System zur Befestigung nach Anspruch 1 dadurch gekennzeichnet, daß die erwähnte Struktur innerhalb des genannten Behälters unterstützt ist, und zeigt wenigstens zwei flache Oberflächen worauf der erwähnte Körper laufen kann.

5- System zur Befestigung nach Anspruch 1 dadurch gekennzeichnet, daß die erwähnten Flügel zwei sind.

**FIG. 1**

**FIG.2**

0188176

1/3

0188176

**FIG.3**

**FIG.4**

**FIG.5**

FIG.6

FIG.7